# EUROPEAN PATENT APPLICATION

(11) **EP 2 863 644 A1**
(43) Date of publication of application: **22.04.2015**
(21) Application number: 14175920.9
(22) Date of filing: 07.07.2014
(51) Int. Cl.: H04N 21/426, H04N 21/433, H04N 21/438, H04N 21/44

(54) **Display apparatus and method for channel changing**

(30) Priority: 08.10.2013 KR 20130119881
(71) Applicant: Samsung Electronics Co., Ltd, Gyeonggi-do 443-742 (KR)
(72) Inventor: Kang, Hee-beom, Gyeonggi-do (KR); Min, Suk-in, Gyeonggi-do (KR); Lee, Sang-keun, Gyeonggi-do (KR); Lee, Seung-myen, Gyeonggi-do (KR)
(74) Representative: Appleyard Lees

(57) **Abstract**

A display apparatus and method for channel changing are provided. The method includes receiving broadcast signals through channels; decoding and outputting a broadcast signal of a watching channel among the channels; generating and storing tables including address information and time information used to decode broadcast signals of standby channels among the channels; and in response to receiving a command to change the watching channel to one of the standby channels, decoding and outputting a broadcast signal of the changed standby channel using a table of the one of the standby channels.

## Description

### CROSS-REFERENCE TO RELATED APPLICATIONS

This application claims priority from Korean Patent Application No. 10-2013-0119881, filed on October 8, 2013, in the Korean Intellectual Property Office, the disclosure of which is incorporated by reference herein in its entirety.

### BACKGROUND

### Field

Apparatuses and methods consistent with exemplary embodiments relate to a display apparatus and method, and more particularly, to a display apparatus and method for faster channel changing.

### Description of the Related Art

In general, display apparatuses that provide digital broadcasting have a disadvantage in that it takes time to change the channel from a watching channel to a standby channel, receive a broadcasting signal through the changed standby channel, and output the broadcasting signal. That is, there is a delay between the change being changed and the signal being output. In order to improve the time delay in changing the channel, diverse channel changing methods have been developed.

One of the related-art channel changing methods is to store a broadcast signal of a watched channel and broadcast signals of adjacent channels in a buffer. However, there is still a disadvantage in that a time delay associated with decoding the temporarily stored broadcast signals of a corresponding channel when changing to the corresponding channel.

Another option is to provide additional decoding components and store decoded signals of both watched signal and the decoded signal of adjacent channels. However, there is a disadvantage in that a waste of resources may be caused by the added decoding components and also the internal composition of the display apparatus becomes complicated.

### SUMMARY

Exemplary embodiments overcome the above disadvantages and other disadvantages not described above. Also, an exemplary embodiment is not required to overcome the disadvantages described above, and an exemplary embodiment might not overcome any of the disadvantages described above.

Exemplary embodiments provide a display apparatus capable of improving a channel changing speed when the display apparatus changes the channel.

According to an aspect of an exemplary embodiment, there is provided a channel changing method including receiving broadcast signals through a plurality of channels, decoding and outputting a broadcast signal of at least one watching channel among the plurality of channels, generating and storing tables including address information and time information used to decode broadcast signals of standby channels among the plurality of channels, and in response to receiving a command to change the watching channel to one of the standby channels, decoding and outputting a broadcast signal of the changed standby channel using a table of the one of the standby channels.

The generating and storing the tables may include extracting time information and start address information of each of audio data and video data with reference to a PES header included in a PES packet demultiplexed from a broadcast signal of each standby channel, determining a compression method of the PES packet based on an elementary stream (ES) included in each PES packet of each standby channel, extracting absolute address information of a decodable reference frame based on the compression method and the start address information that are determined from each PES packet, and generating and storing the tables in which the time information and the absolute address information of each PES packet of each standby channel are recorded.

In the extracting the absolute address information, when a compression method of the PES packet is moving picture coding experts group (MPEG), the absolute address information may be detected based on picture frame information, and when a compression method of the PES packet is H.264, the absolute address information may be detected based on slice information.

The table may be updated according to the broadcast signal of the standby channels.

The method may further include when the time information and the absolute address information of the PES packet are recorded on the table generated for each standby channel, and when new time information and absolute address information of the PES packet are extracted, updating the table by deleting the time information and the absolute address information that have been recorded earliest in the table and by recording the new time information and absolute address information.

The method may further include when the watching channel is selected, selecting and tuning in to a number of adjacent channels as the standby channels on the basis of the watching channel.

In the generating and storing the tables, when the display apparatus is set to a single mode, a broadcast signal received through the watching channel among the plurality of channels may be decoded, and the tables may be generated based on broadcast signals received through the standby channels.

In the generating and storing the tables, when the display apparatus is set to a picture-in-picture (PIP) mode, broadcast signals received through two watching channels among the plurality of channels may be decoded, and the tables may be generated based on broadcast signals received through the standby channels except for the two watching channel.

The decoding and outputting the broadcast signal of the changed standby channel may include stopping decoding the watching channel in accordance with the channel changing command, and determining a table of a standby channel corresponding to the channel changing command among the tables of the standby channels, acquiring absolute address information of a picture frame that is decodable at a point of time at which the channel changing command is received from among absolute address information included in the determined table, and decoding the picture frame of the standby channel corresponding to the channel change command based on the acquired absolute address information.

The decoding and outputting the broadcast signal of the changed standby channel may further include acquiring absolute address information of a decodable audio frame from the table of the standby channel corresponding to the channel changing command based on time information corresponding to the acquired absolute address information, and decoding the audio frame of the standby channel corresponding to the channel changing command based on the acquired absolute address information.

According to an aspect of another exemplary embodiment, there is provided a display apparatus including a broadcast receiver configured to receive broadcast signals through a plurality of channels, a decoder configured to decode a broadcast signal of at least one watching channel among the plurality of channels, an outputter configured to output the decoded broadcast signal, a storage configured to store tables including address information and time information used to decode broadcast signals of standby channels among the plurality of channels, and a controller configured to, in response to receiving a command to change the watching channel to one of the standby channels, control the decoder and the outputter to decode and output a broadcast signal of the standby channel corresponding to the channel change command based on a table of the one of the standby channels.

The display apparatus may further include a demultiplexer that is configured to demultiplex a PES packet from the broadcast signal of each standby channel, and the controller may refer to a PES header included in each demultiplexed PES packet and may extract time information and start address information of each of audio data and video data, determine a compression method of the PES packet based on an elementary stream (ES) included in each PES packet of each standby channel, extract absolute address information of a decodable reference frame based on the compression method and the start address information that are determined from each PES packet, and record the time information and the absolute address information of each PES packet of each standby channel on the tables.

When a compression method of the PES packet is moving picture coding experts group (MPEG), the controller may extract the absolute address information based on picture frame information, and when a compression method of the PES packet is H.264, the controller may extract the absolute address information based on slice information.

The controller may update the table according to the broadcast signal of the standby channels.

When the time information and the absolute address information of the PES packet is recorded in the table generated for each standby channel, and when new time information and absolute address information of the PES packet are extracted, the controller may delete the time information and the absolute address information that have been recorded earliest in the table, and record the new time information and absolute address information.

The broadcast receiver may include a main tuner configured to tune in to the watching channel when the watching channel is selected, and a sub tuner configured to select and tune in to a number of adjacent channels as the standby channels on the basis of the watching channel.

When the display apparatus is set to a single mode, the controller may control the decoder to decode a broadcast signal received through the watching channel among the plurality of channels, and generate the tables based on broadcast signals received through the standby channels.

The decoder may include a first decoder and a second decoder, and when the display apparatus is set to a picture-in-picture (PIP) mode, the controller may control the first decoder and the second decoder to decode broadcast signals received through two watching channels, respectively, among the plurality of channels, and generate the tables based on broadcast signals received through the standby channels except for the two watching channels.

The controller may determine a table of a standby channel corresponding to the channel changing command among the tables of the standby channels in accordance with the channel changing command, acquire absolute address information of a picture frame that is decodable at a point of time at which the channel changing command is received from among absolute address information included in the determined table, and control the decoder to stop decoding the watching channel, and to decode the picture frame of the standby channel corresponding to the channel change command based on the acquired absolute address information.

The controller may acquire absolute address information of a decodable audio frame from the table of the standby channel corresponding to the channel changing command based on time information corresponding to the acquired absolute address information, and control the decoder to decode the audio frame of the standby channel corresponding to the channel changing command based on the acquired absolute address information.

### BRIEF DESCRIPTION OF THE DRAWING FIGURES

The above and/or other aspects will be more apparent by describing certain exemplary embodiments with reference to the accompanying drawings, in which:
FIG. 1 is a block diagram of a configuration of a display apparatus according to an exemplary embodiment;
FIG. 2 is a detailed block diagram of a configuration of a display apparatus according to an exemplary embodiment;
FIG. 3 illustrates tables in which time information and absolute address information for PES packets of a plurality of standby channels are recorded according to an exemplary embodiment;
FIG. 4 illustrates the display apparatus that changes a watching channel to a standby channel corresponding to a channel changing command according to an exemplary embodiment;
FIG. 5 is a flow chart of a channel changing method of the display apparatus according to an exemplary embodiment;
FIG. 6 is a flow chart of a method for generating a table in the display apparatus according to an exemplary embodiment; and
FIG. 7 is a flow chart of a method for decoding a broadcast signal of a standby channel based on a pre-stored table in the display apparatus according to an exemplary embodiment.

### DETAILED DESCRIPTION OF EXEMPLARY EMBODIMENTS

Certain exemplary embodiments will now be described in greater detail with reference to the accompanying drawings.

In the following description, same drawing reference numerals are used for the same elements even in different drawings. The matters defined in the description, such as detailed construction and elements, are provided to assist in a comprehensive understanding of the inventive concept. Thus, it is apparent that the exemplary embodiments can be carried out without those specifically defined matters. Also, well-known functions or constructions are not described in detail since they would obscure the inventive concept with unnecessary detail.

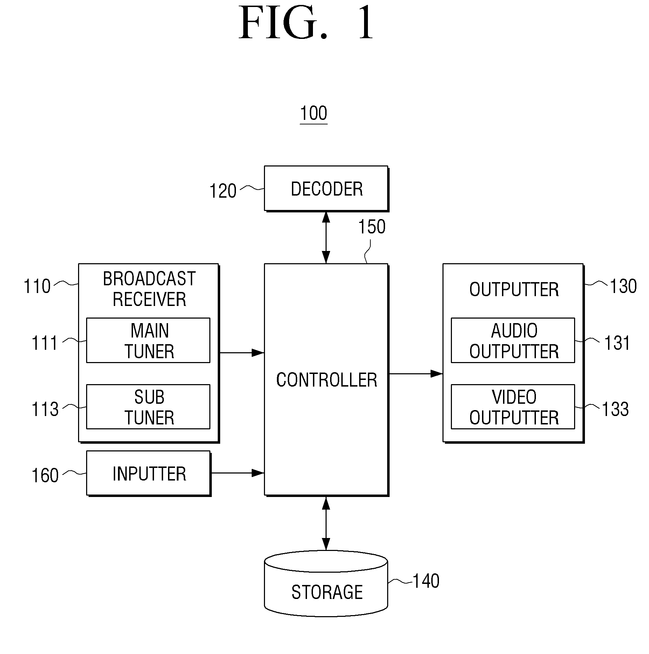

FIG. 1 is a block diagram of an example configuration of a display apparatus according to an exemplary embodiment.

With reference to FIG. 1, a display apparatus 100 may include a broadcast receiver 110, a decoder 120, an outputter 130, a storage 140, a controller 150, and an inputter 160.

The broadcast receiver 110 receives broadcast signals through a plurality of channels. More specifically, the broadcast receiver 110 may receive broadcast signals through a plurality of channels tuned by a main tuner 111 and a sub tuner 113.

The main tuner 111 tunes in to a watching channel that is initially set or is set by the user through the inputter 160, and receives a broadcast signal. When the main tuner 111 receives the broadcast signal through the watching channel, the decoder 120 decodes audio and video data included in the received broadcast signal, and the outputter 130 outputs the decoded audio and video data through an audio outputter 131 and a video outputter 133.

The sub tuner 113 tunes in to a number of adjacent channels as standby channels on the basis of the watching channel, and receives broadcast signals through the tuned adjacent channels. The number of adjacent channels may be predetermined. One or more sub tuners 113 may be provided. If there are n sub tuners 113, each of the n sub tuners 113 may tune in to a standby channel and receive a broadcast signal through the tuned channel. The standby channel may be predetermined.

For example, the broadcast receiver 110 may include a single main tuner 111 and five sub tuners 113. In this case, two of the five sub tuners 113 may tune in to two upper standby channels that are adjacent to a watching channel tuned by the main tuner 111, and the remaining three sub tuners 113 may tune in to three lower standby channels that are adjacent to the watching channel tuned by the main tuner 111. However, this is only an example, and a greater number or lesser number of sub-tuners 113 may be provided.

When the main tuner 111 and the sub tuners 113 receive broadcast signals through the watching channel and the standby channels, respectively, the decoder 120 may decode audio and video data included in a broadcast signal of the watching channel among the received broadcast signals, and the outputter 130 may output the decoded audio and video data through the audio outputter 131 and the video outputter 133.

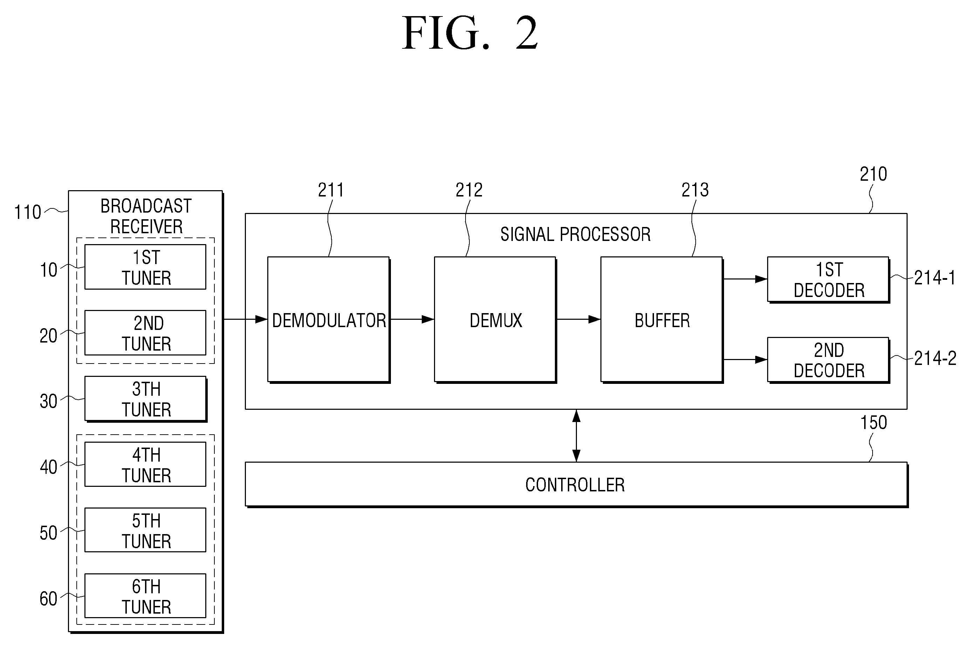

FIG. 2 is a detailed block diagram of an example of a configuration of a display apparatus according to an exemplary embodiment.

With reference to FIG. 2, the display apparatus may further include a signal processor 210 as well as the broadcast receiver 110 and the controller 150 which are illustrated in FIG. 1. The signal processor 210 performs signal processing for a broadcast signal received through the broadcast receiver 110. The signal processor 210 may include a demodulator 211, a demultiplexer (DEMUX) 212, a buffer 213, and a first (1st) decoder 214-1 a second (2nd) decoder 214-2.

The demodulator 211 demodulates a modulated broadcast signal that is received through at least one of terrestrial, cable, and satellite broadcast channels by the broadcast receiver 110 to an original broadcast signal. The DEMUX 212 divides the demodulated broadcast signal into audio and video data, and the buffer 213 temporarily stores the broadcast signal divided into the audio and video data. At least one of the first decoder 214-1 and the second decoder 214-2 decodes the audio and video data that are temporarily stored in the buffer 213.

More specifically, the broadcast receiver 110 may include 1^{st} to 6^{th} tuners 10-60. Among the tuners 10-60, the 3^{rd} tuner 30 may be the aforementioned main tuner 111, which tunes in to a watching channel which is initially set or is set by the user through the inputter 160 and receives a broadcast signal. The 1^{st} tuner 10 and the 2^{nd} tuners 20 and the 4^{th} tune 40, the 5^{th} tuner 50, and the 6^{th} tuner 60 may be the aforementioned sub tuners 113. The 1^{st} tuner 10 and the 2^{nd} tuner 20 tune in to upper standby channels that are adjacent to the watching channel tuned by the 3^{rd} tuner 30 and receive broadcast signals. The 4^{th} tuner 40, 5^{th} tuner 50, and 6^{th} tuner 60 tune in to lower standby channels that are adjacent to the watching channel tuned by the 3^{rd} tuner 30 and receive broadcast signals.

When the 1^{st} to 6^{th} tuners 10-60 receive a plurality of broadcast signals through the watching channel and the standby channels, the demodulator 211 demodulates each broadcast signal to an original broadcast signal, and outputs the original broadcast signal to the DEMUX 212. Accordingly, the DEMUX 212 generates a packetized elementary stream (PES) packet by parsing a transfer stream for each broadcast signal demodulated by the demodulator 211, and divides each broadcast signal into audio and video data based on an elementary stream (ES) of the generated PES packet.

When the audio and video data are separated from each broadcast signal received by the 1^{st} to 6^{th} tuners 10-60, the buffer 213 temporarily stores the separated audio and video data.

Accordingly, the first decoder 214-1 or the second decoder 214-2 decodes the separated audio and video data. More specifically, when the display apparatus is set to a single mode, the first decoder 214-1 decodes audio and video data of a broadcast signal received by the 3^{rd} tuner 30, which is the main tuner 111, according to a control command of the controller 150. On the other hand, when the display apparatus is set to a picture-in-picture (PIP) mode, the 3^{rd} tuner 30 and another tuner among the 1^{st} to 6^{th} tuners 10-60 may become main tuners 111. For example, in the PIP mode, when the 3^{rd} tuner 30 and the 4^{th} tuner 40 are set to main tuners 111, the first decoder 214-1 decodes audio and video data of a broadcast signal received by the 3^{rd} tuner 30, which is a main tuner 111, according to a control command of the controller 150, and the second decoder 214-2 decodes audio and video data of a broadcast signal received by the 4^{th} tuner 40, which is another main tuner 111, according to a control command of the controller 150.

As described above, according to the set output mode, the display apparatus may decode audio and video data of one or two broadcast signals among a plurality of broadcast signals received by the 1^{st} to 6^{th} tuners 10-60 using the first decoder 214-1 and the second decoder 214-2. The controller 150 may generate tables to decode other broadcast signals except for the decoded broadcast signals and may store the tables in the storage 140 so as to perform faster channel changing to a standby channel corresponding to a channel changing command when the channel changing command is received.

As shown in FIG. 1, the storage 140 is a storage medium that stores diverse programs used to operate the display apparatus, and may be implemented with a memory, a hard disk drive (HDD), etc. For example, the storage 140 may include a read-only memory (ROM) that stores programs to operate the controller 150, and a random access memory (RAM) that temporarily stores data related to operation of the controller 150. In addition, the storage 140 may further include an electrically erasable and programmable ROM (EEROM) that stores diverse reference data. The storage 140 stores a table that includes address information and time information to decode broadcast signals of the standby channels among the plurality of channels. There may be a plurality of tables corresponding to the standby channels among the plurality of channels. When broadcast signals are received through the standby channels tuned by the 1^{st} tuner 10 and the 2^{nd} tuner 20 and the 4^{th} tuner 40, 5^{th} tuner 50, and the 6^{th} tuner 60 among the 1^{st} to 6^{th} tuners 10-60 as shown in FIG. 2, the storage 140 may store 1^{st} to 5^{th} tables in which address information and time information generated to decode each broadcast signal received by the 1^{st} tuner 10 and the 2^{nd} tuner 20, and the 4^{th} tuner 40, the 5^{th} tuner 50 and the 6^{th} tuner 60 are recorded.

The controller 150 controls the overall operation of the components of the display apparatus. In particular, when the broadcast receiver 110 receives broadcast signals through a plurality of channels, the controller 150 generates tables including address information and time information to decode broadcast signals of the standby channels, except for a watching channel, among the received broadcast signals, and stores the generated table in the storage 140.

In addition, when a command to change the channel from a currently watching channel to one of the standby channels is received, for example through the inputter 160, the controller 150 controls the decoder 120 and the outputter 130 to decode and output a broadcast signal of a standby channel corresponding to the input channel changing command based on a table pre-stored in the storage 140.

More specifically, when the broadcast receiver 110 receives broadcast signals through a plurality of channels, the controller 150 extracts time information and start address information of each audio and video data with reference to a PES header included in each PES packet demultiplexed from broadcast signals of the standby channels, except for a watching channel, among the received broadcast signals. The time information is information to synchronize the audio and video data, and the start address information is information that indicates start of an ES included in the PES packet for the audio and video data.

As described with reference to FIG. 2, a channel tuned by the 3^{rd} tuner 30 among the 1^{st} to 6^{th} tuners 10-60 may become a watching channel, channels tuned by the 1^{st} tuner 10 and the 2^{nd} tuner 20, and the 4^{th} tuner 40, the 5^{th} tuner 50, and the 6^{th} tuner 60 may become standby channels. When a broadcast signal is received through each standby channel, the controller 150 may acquire a PES header from a PES packet for audio and video data of each broadcast signal temporarily stored in the buffer 213, and extract time information and start address information for the audio and video data of each broadcast signal with reference to the PES header.

When the time information and the start address information for the audio and video data of each broadcast signal are extracted from the PES header included in the PES packet of each standby channel, the controller 150 determines a compression method for each PES packet based on an ES included in the PES packet of each standby channel. Subsequently, the controller 150 extracts absolute address information of a decodable reference frame for an ES of each PES packet based on the compression method determined from the PES packet and the start address information.

In an exemplary embodiment, when a compression method of at least one of the PES packets of the standby channels is Moving Picture Experts Group (MPEG), the controller 150 may extract absolute address information from an ES included in the PES packet based on picture frame information.

When a compression method of at least one of the PES packets of the standby channels is H.264, the controller 150 may extract absolute address information from an ES included in the PES packet based on splice information.

For example, an ES of a PES packet compressed in MPEG may include an intra (I) picture frame, a previous (P) picture frame, and a bi-directional (B) picture frame. The I picture frame is decodable separately, the P picture frame is decodable with reference to the I picture frame, and the B picture frame is decodable with reference to the I picture frame and the P picture frame which exist before and after in time.

Accordingly, the controller 150 may extract a point in which the I picture frame is located as absolute address information from the ES included in the PES packet.

When the absolute address information of the decodable reference frame for the ES of the PES packet is extracted, the controller 150 may record the time information and the absolute address information for the PES packet of each standby channel in a table which is pre-stored in the storage 140.

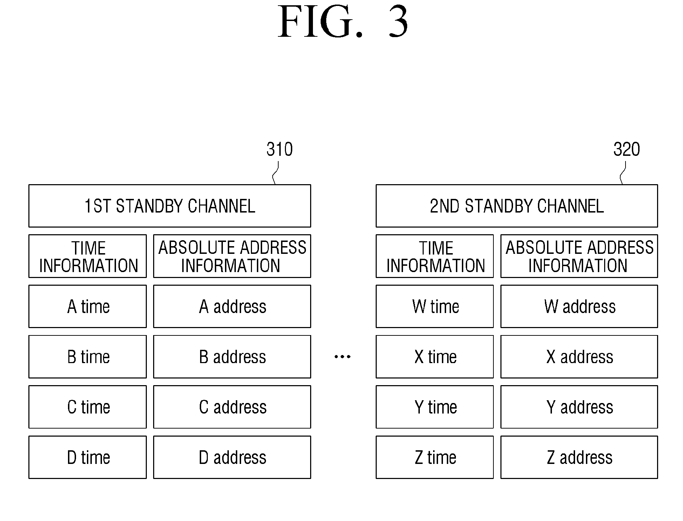

FIG. 3 illustrates tables in which record time information and absolute address information for PES packets of a plurality of standby channels are recorded according to an exemplary embodiment.

As shown in FIG. 3, a first table 310 and a second table 320 may record time information and absolute address information for PES packets of different standby channels.

For example, referring to FIGS. 2 and 3, broadcast signals of standby channels may be received through the 1^{st} tuner 10 and the 2^{nd} tuner 20. In this case, the first table 310 may record time information and absolute address information for a PES packet demultiplexed from a broadcast signal of a standby channel tuned by the 1^{st} tuner 10. The second table 320 may record time information and absolute address information for a PES packet demultiplexed from a broadcast signal of a standby channel tuned by the 2^{nd} tuner 20.

The time information and the absolute address information recorded on the first table 310 and the second table 320 may be sequentially recorded in the order in which the broadcast signals are received through the standby channels tuned by the 1^{st} tuner 10 and 2^{nd} tuner 20. In other words, time information (A time and W time) and absolute address information (A address and W address) of broadcast signals that are firstly received through the standby channels tuned by the 1^{st} tuner 10 and the 2^{nd} tuner 20 may be recorded on the upper portions of the first table 310 and the second table 320. In addition, time information (D time and Z time) and absolute address information (D address and Z address) of broadcast signals that are recently received through the standby channels tuned by the 1^{st} tuner 10 and the second tuner 20 may be recorded on the lower portions of the first table 310 and the second table 320.

The tables that record the time information and absolute address information extracted to decode broadcast signals of the standby channels may be updated according to the broadcast signal of the standby channels. More specifically, when time information and absolute address information for PES packets have been recorded on the table generated for each standby channel, and when new time information and absolute address information for a PES packet are extracted, the controller 150 deletes time information and absolute address information that have been recorded earliest in the table. Subsequently, the controller 150 records the new time information and absolute address information on the deleted area of the table so that the table may be updated.

When a channel changing command is received, for example through the inputter 160, the controller 150 determines a table of a standby channel corresponding to the channel change command among the standby channels. Subsequently, the controller 150 acquires absolute address information of a picture frame capable of decoding at a point of time at which the channel switching command is received from among absolute address information included in the determined table. Subsequently, the controller 150 controls the decoder 120 to stop decoding a watching channel and to decode the picture frame corresponding to the channel changing command based on the acquired absolute address information.

In addition, the controller 150 acquires absolute address information of a decodable audio frame from the table of the standby channel corresponding to the channel switching command based on time information matched with the acquired absolute address information. Subsequently, the controller 150 controls the decoder 120 to decode the audio frame of the standby channel corresponding to the channel changing command based on the acquired absolute address information.

Accordingly, the decoder 120 may decode audio and video data of the standby channel corresponding to the channel switching command based on the absolute address information of the standby channel.

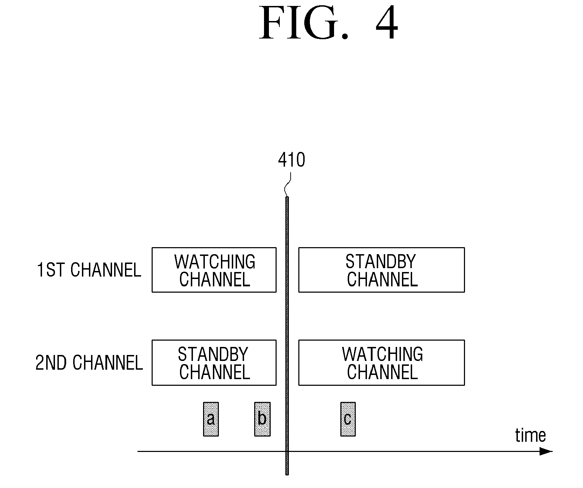

FIG. 4 illustrates the display apparatus that changes a watching channel to a standby channel corresponding to a channel changing command according to an exemplary embodiment.

With reference to FIG. 4, the main tuner 111 may receive a broadcast signal through the first channel that is a watching channel, and the sub tuner 113 may receive a broadcast signal through the second channel that is a standby channel. When the main tuner 111 and the sub tuner 113 receive broadcast signals through the first and second channels respectively, the decoder 120 decodes audio and video data of the broadcast signal received through the first channel as described above. Accordingly, the outputter 130 may output the decoded audio and video data through the audio outputter 131 and the video outputter 133.

The controller 150 may extract time information and absolute address information to decode audio and video data of the broadcast signal received through the second channel, and may record the extracted time information and absolute address information in a table.

When broadcast signals of the first channel of the watching channel are being decoded and output, a command to change the channel to the second channel of the standby channel may be input by the user. When the channel changing command is received, the controller 150 acquires absolute address information of a picture frame capable of decoding at a point of time 410 at which the channel changing command is received with reference to the table of the second channel corresponding to the channel changing command. As shown in FIG. 4, picture frames a, b, and c of broadcast signals of the second channel are determined to be reference frames, and absolute address information of picture frames a, b, and c may be recorded in the table. Accordingly, with reference to the table, the controller 150 may acquire absolute address information of a picture frame capable of decoding at the point of time 410 at which the channel changing command is received. The picture frame capable of decoding at the point of time 410 at which the channel changing command is received may be picture frame b as shown in FIG. 4. Accordingly, the controller 150 acquires the absolute address information of picture frame b with reference to the table, and controls the decoder 120 to decode the broadcast signal of the second channel of the standby channel based on the acquired absolute address information. In addition, the controller 150 acquires absolute address information of an audio frame synchronized with picture frame b based on time information matched with the acquired absolute address information of picture frame b with reference to the table.

Accordingly, the decoder 120 may stop decoding the audio and video data of the broadcast signal of the first channel, and decode the audio and video data of the broadcast signal of the second channel based on the acquired absolute address information.

The components of the display apparatus according to various exemplary embodiments have been described so far. A method for changing a watching channel to a standby channel in the display apparatus according to exemplary embodiments is now described below in detail.

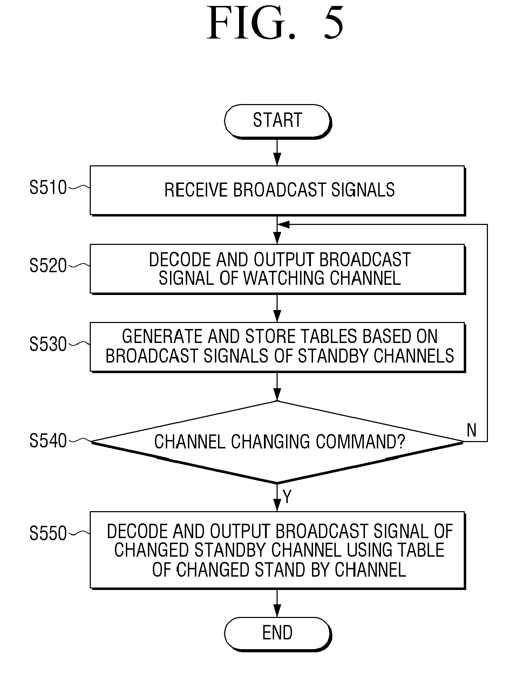

FIG. 5 is a flow chart of a channel changing method of the display apparatus according to an exemplary embodiment.

With reference to FIG. 5, the display apparatus receives broadcast signals (S510). More specifically, the display apparatus may tune in to a plurality of channels using the main tuner and the sub tuners, and receive broadcast signals through the tuned channels. That is, when a watching channel is selected, the display apparatus may tune in to the watching channel using the main tuner and receive broadcast signals through the watching channel. At this time, the display apparatus may select a number of adjacent channels as standby channels on the basis of the selected watching channel. The number of adjacent channels may be predetermined. Accordingly, the display apparatus may tune in to standby channels through the sub tuners and receive broadcast signals through the standby channels.

When broadcast signals are received through the watching channel and the standby channels, the display apparatus decodes and outputs a broadcast signal of the watching channel (S520). The display apparatus generates and stores tables including address information and time information to decode broadcast signals of the standby channels (S530).

In an exemplary embodiment, when the image output mode is set to the single mode, the display apparatus may decode a broadcast signal received through a single watching channel, using a single decoder, among the broadcast signals received through the plurality of channels. The display apparatus may generate and store tables based on broadcast signals received through the standby channels, except for the single watching channel, among the plurality of channels.

When the image output mode is set to the PIP mode, the display apparatus may decode broadcast signals received through two watching channels, using the two decoders, among the broadcast signals received through the plurality of channels. The display apparatus may generate and store tables based on broadcast signals received through the standby channels, except for the two watching channels, among the plurality of channels.

When the tables are stored, the display apparatus determines whether a command to change the watching channel to one of the standby channels is received (S540). As a result, when the channel changing command is not received (N in S540), the process returns to operation S520 and the display apparatus continuously decodes and outputs a broadcast signal of the current watching channel.

However, when the channel changing command is received (Y in S540), the display apparatus decodes and outputs a broadcast signal of a standby channel corresponding to the received channel changing command using a table of the standby channel among the pre-stored tables (S550).

A method for generating and storing tables including address information and time information to decode the standby channels, except for the watching channel, among the plurality of channels in the display apparatus according to an exemplary embodiment is described below in greater detail.

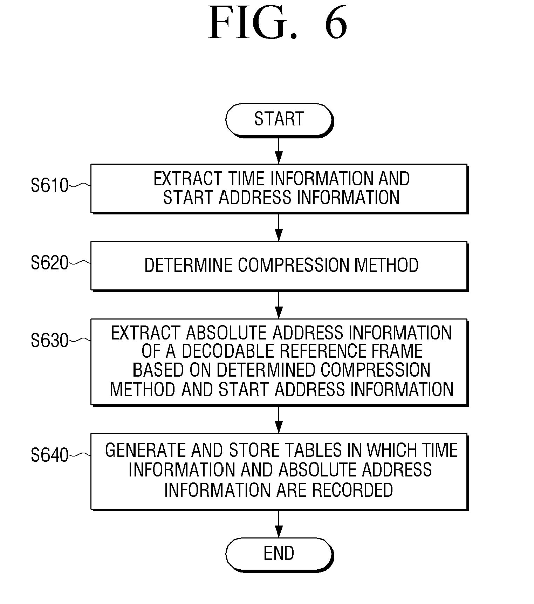

FIG. 6 is a flow chart of a method for generating a table in the display apparatus according to an exemplary embodiment.

With reference to FIG. 6, the display apparatus extracts time information and start address information (S610). That is, for each of the standby channels, except for a watching channel, among the plurality of channels, the display apparatus extracts time information and start address information with reference to a PES header included in a PES packet that is demultiplexed from a broadcast signal for the channel.

Subsequently, the display apparatus determines a compression method (S620). That is, the display apparatus determines a compression method of each PES packet based on an ES included in the PES packet of each standby channel. When the compression method of each PES packet is determined, the display apparatus extracts absolute address information of a decodable reference frame based on the compression method and the start address information (S630).

In an exemplary embodiment, when a compression method of at least one of the PES packets of the standby channels is MPEG, the display apparatus may extract absolute address information packet based on picture frame information. When a compression method of at least one of the PES packets of the standby channels is H.264, the display apparatus may extract absolute address information based on splice information.

When the absolute address information of each PES packet of the standby channels is extracted, the display apparatus generates and stores tables in which the time information and the absolute address information of each PES packet of the standby channels are recorded (S640).

The tables may be updated according to the broadcast signal of the standby channels. More specifically, time information and absolute address information of PES packets may be recorded on at least one of the tables generated for the standby channels. When time information and absolute address information of PES packets have been recorded in a table, and when new time information and absolute address information of a PES packet are extracted, the display apparatus deletes initially recorded time information and absolute address information from the table. Subsequently, the display apparatus records the new time information and absolute address information in the deleted area of the table so that the table may be updated.

A method for decoding and outputting a broadcast signal of a standby channel corresponding to a channel changing command based on a pre-stored table according to the channel changing command in the display apparatus according to an exemplary embodiment is described below in greater detail.

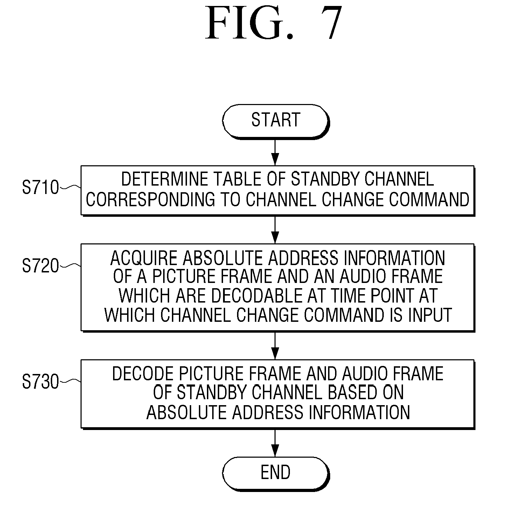

FIG. 7 is a flow chart of a method for decoding a broadcast signal of a standby channel based on a pre-stored table in the display apparatus according to an exemplary embodiment.

With reference to FIG. 7, when a channel changing command is received, the display apparatus stops decoding a broadcast signal of a current watching channel. Subsequently, the display apparatus determines a table of a standby channel corresponding to the received channel changing command (S710). That is, the display apparatus determines a table among the plurality of pre-stored tables corresponding to the standby channels. When the table of the standby channel corresponding to the channel changing command is determined, the display apparatus acquires absolute address information of a picture frame and an audio frame which are decodable at a point of time at which the channel changing command is received (S720).

More specifically, when the table of the standby channel corresponding to the channel changing command is determined, the display apparatus acquires absolute address information of a picture frame which is decodable at a point of time at which the channel changing command is received. Subsequently, the display apparatus may acquire absolute address information of an audio frame from the table based on time information matched with the acquired absolute address information of the picture frame.

When the absolute address information of the picture frame and the audio frame which are decodable at the point of time at which the channel changing command is received are acquired, the display apparatus decodes the picture frame and the audio frame of the standby channel based on the acquired absolute address information (S730). Accordingly, the display apparatus may output the decoded audio and video data of the standby channel corresponding to the channel changing command at the point of time at which the channel changing command is received.

According to the exemplary embodiments, the display apparatus may minimize a waste of resources such as components to process broadcast signals, and enhance the channel changing speed.

The foregoing exemplary embodiments and advantages are merely exemplary and are not to be construed as limiting the present inventive concept. The present inventive concept can be readily applied to other types of apparatuses. Also, the description of the exemplary embodiments is intended to be illustrative, and not to limit the scope of the claims, and many alternatives, modifications, and variations will be apparent to those skilled in the art.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A channel changing method comprising:
receiving broadcast signals through a plurality of channels;
decoding and outputting a broadcast signal of at least one watching channel among the plurality of channels;
generating and storing tables including address information and time information to decode broadcast signals of standby channels among the plurality of channels; and
when a command to change the watching channel to one of the standby channels is input, decoding and outputting a broadcast signal of the changed standby channel using a table of the one of the standby channels.

2. The method as claimed in claim 1, wherein the operation of generating and storing the tables comprises:
extracting time information and start address information of each of audio and video data with reference to a packetized elementary stream (PES) header included in a PES packet demultiplexed from a broadcast signal of each standby channel;
determining a compression method of the PES packet based on an elementary stream (ES) included in each PES packet of each standby channel;
extracting absolute address information of a decodable reference frame based on the compression method and the start address information that are determined from each PES packet; and
generating and storing the tables in which the time information and the absolute address information of each PES packet of each standby channel are recorded.

3. The method as claimed in claim 2, wherein in the operation of extracting the absolute address information, when a compression method of the PES packet is Moving Picture Experts Group (MPEG), the absolute address information is detected based on picture frame information, and when a compression method of the PES packet is H.264, the absolute address information is detected based on slice information.

4. The method as claimed in any one of claims 1 to 3, wherein the table is updated according to the broadcast signal of the standby channels.

5. The method as claimed in claim 4, further comprising:
when all of the time information and the absolute address information of the PES packet are recorded in the table generated for each standby channel, and when new time information and absolute address information of the PES packet are extracted, updating the table by deleting the time information and the absolute address information that have been recorded earliest in the table and recording the new time information and absolute address information.

6. The method as claimed in any one of claims 1 to 5, further comprising:
when the watching channel is selected, selecting and tuning in to a predetermined number of adjacent channels on the basis of the watching channel as the standby channels.

7. The method as claimed in any one of claims 1 to 6, wherein in the operation of generating and storing the tables, when the display apparatus is set to a single mode, a broadcast signal received through the watching channel among the plurality of channels is decoded, and the tables are generated based on broadcast signals received through the standby channels.

8. The method as claimed in any one of claims 1 to 7, wherein in the operation of generating and storing the tables, when the display apparatus is set to a picture-in-picture (PIP) mode, broadcast signals received through two watching channels among the plurality of channels are decoded, and the tables are generated based on broadcast signals received through the standby channels except for the two watching channel.

9. The method as claimed in any one of claims 2 to 8, wherein the operation of decoding and outputting the broadcast signal of the changed standby channel comprises:
stopping decoding the watching channel in accordance with the channel changing command, and determining a table of a standby channel corresponding to the channel changing command among the tables of the standby channels;
acquiring absolute address information of a picture frame that is decodable at a point of time at which the channel changing command is input from among absolute address information included in the determined table; and
decoding the picture frame of the standby channel corresponding to the channel change command based on the acquired absolute address information.

10. The method as claimed in claim 9, wherein the operation of decoding and outputting the broadcast signal of the changed standby channel further comprises:
acquiring absolute address information of a decodable audio frame from the table of the standby channel corresponding to the channel changing command based on time information corresponding to the acquired absolute address information; and
decoding the audio frame of the standby channel corresponding to the channel changing command based on the acquired absolute address information.

11. A display apparatus comprising:
a broadcast receiver configured to receive broadcast signals through a plurality of channels;
a decoder configured to decode a broadcast signal of at least one watching channel among the plurality of channels;
an outputter configured to output the decoded broadcast signal;
a storage configured to store tables including address information and time information to decode broadcast signals of standby channels among the plurality of channels; and
a controller configured to, when a command to change the watching channel to one of the standby channels is input, control the decoder and the outputter to decode and output a broadcast signal of the standby channel corresponding to the channel change command based on a table of the one of the standby channels.

12. The display apparatus as claimed in claim 11, wherein the controller extracts time information and start address information of each of audio and video data with reference to a packetized elementary stream (PES) header included in a PES packet demultiplexed from a broadcast signal of each standby channel,
determines a compression method of the PES packet based on an elementary stream (ES) included in each PES packet of each standby channel;
extracts absolute address information of a decodable reference frame based on the compression method and the start address information that are determined from each PES packet, and
records the time information and the absolute address information of each PES packet of each standby channel in the tables.

13. The display apparatus as claimed in claim 12, wherein when a compression method of the PES packet is moving picture coding experts group (MPEG), the controller extracts the absolute address information based on picture frame information, and when a compression method of the PES packet is H.264, the controller extracts the absolute address information based on slice information.

14. The display apparatus as claimed in any one of claims 11 to 13, wherein the table is updated according to the broadcast signal of the standby channels.

15. The display apparatus as claimed in claim 14, wherein when all of the time information and the absolute address information of the PES packet are recorded in the table generated for each standby channel, and when new time information and absolute address information of the PES packet are extracted, the controller deletes the time information and the absolute address information that have been recorded earliest in the table and records the new time information and absolute address information.
